(19) **Europäisches Patentamt**
**European Patent Office**
**Office européen des brevets**

(11) **EP 3 708 471 B1**

(12) **EUROPEAN PATENT SPECIFICATION**

(45) Date of publication and mention
of the grant of the patent:
**01.12.2021 Bulletin 2021/48**

(21) Application number: **19425018.9**

(22) Date of filing: **15.03.2019**

(51) Int Cl.:
*B62D 55/088* $^{(2006.01)}$    *B62D 55/21* $^{(2006.01)}$
*B62D 55/32* $^{(2006.01)}$    *B21L 9/06* $^{(2006.01)}$
*B23P 19/02* $^{(2006.01)}$    *F16G 13/07* $^{(2006.01)}$
*F16G 13/06* $^{(2006.01)}$

(54) **CONTROL SYSTEM AND METHOD FOR AUTOMATICALLY CONTROLLING THE ASSEMBLY OF A CHAIN**

STEUERUNGSSYSTEM UND -VERFAHREN ZUR AUTOMATISCHEN STEUERUNG DER ANORDNUNG EINER KETTE

SYSTÈME DE COMMANDE ET PROCÉDÉ POUR COMMANDER AUTOMATIQUEMENT L'ASSEMBLAGE D'UNE CHAÎNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.09.2020 Bulletin 2020/38**

(73) Proprietors:
• **Berco S.p.A.**
  **44034 Copparo FE (IT)**
• **thyssenkrupp AG**
  **45143 Essen (DE)**

(72) Inventors:
• **Siviero, Andrea**
  **I-45015 Corbola (RO) (IT)**

• **Grenzi, Francesco**
  **I-44121 Ferrara (IT)**
• **Friani, Giuseppe**
  **I-44123 Ferrara (IT)**

(74) Representative: **Biallo, Dario et al**
**Barzanò & Zanardo Milano S.p.A.**
**Via Borgonuovo, 10**
**20121 Milano (IT)**

(56) References cited:
**DE-A1- 4 121 105    US-A- 3 831 257**
**US-A- 4 265 084    US-A- 4 621 491**
**US-A- 4 766 720    US-A1- 2012 056 472**

## Description

The present invention refers to a control system and a method for automatically controlling the assembly of a chain particularly for track-type vehicles intended for ground movement.

The tracks of a tracked work vehicle generally comprise a pair of parallel chains wherein each chain is made by means of a continuous sequence of articulated joints of hinge type, connected, to each other and maintained at a constant distance by means of appropriate rigid connection members called chain links.

The chains also comprise a plurality of bushings and pins interposed between the links to connect their ends, so to form the chains. In particular the bushings and the pins forms the articulated joints that cooperate with the chain links in order to permit the necessary rotational movement between adjacent chain links.

This permits the articulation of the adjacent chain links when the track rotates, wound around the wheels of the track means.

The rotation of the track permits the tracked machinery to move on the ground, so to carry out the many operations for which it is intended.

Each link comprises two plates opposed to each other. Each plate presents a first end portion and a second end portion parallel to each other and connected to each other by a transversal portions. Thus, the plates are shaped so that, when the chain link is assembled, the interspace between the first end portions of the pair of the plates of each chain link is greater than the interspace between the second end portions.

The first end portion and the second end portion of each plate present respective through holes for the connection respectively to the pin and to the bushing. In particular, by considering two connected chain links, a bushing couples with the through holes of the second end portions of the plates of one link so as to become integral with them whereas the respective pin crosses also the through holes of the first end portions of the plates of the other chain link so as to become integral with them.

The chains are typically equipped with a seal system, which has the object of keeping out corrosive and abrasive mixtures of water, dirt, sand, stone or other mineral or chemical elements to which the chain is exposed during its use.

The seal system has the function of holding a lubricant inside the chain joints in order to facilitate the relative articulation movement of the chain links.

The abovementioned functions are generally carried out by means of a frontal seal system obtained through seal elements arranged within housings of the chain links and having seal portions which push against the end surfaces of the respective bushings, according to known seal systems.

In particular, the first end portions of the plates of each chain link present at the through holes respective annular grooves facing inwards the chain. In particular, the annular grooves have an internal diameter which is greater with respect to the internal diameter of the through holes.

The annular grooves house a suitable sealing system depending on the type of the chain.

Indeed, the chain can be of the grease type or of the lubricated type.

In the chains of the grease type, some grease is provided between the inner surface of the bushings and the outer surface of the respective pins; the pins are therefore, engaged at their ends with respective seal made of, polyurethane and housed in the space created by the annular grooves.

In the chains of the lubricated type, each pin presents an internal duct opened at one end of the pin so as to allow the inlet of lubricant; such an internal duct is in fluidic communication with the exterior of the pin at the region covered by the relative bushing so as to allow the outlet of the lubricant. The pins are engaged at their ends with respective steel rings and seal housed in the space created by the annular grooves. The steel rings, thus, acts as spacing element between the connected end portions of the plates of two consecutive chain links in order to avoid the overpressure on the seal that can cause a malfunction of the sealing system and consequently leaks of lubricant and wear damages to the bushings.

In all cases the chain assembly is usually carried out by a hydraulic press.

Such an hydraulic press presents an assembly area provided with a first support element and a second support element positioned at a mutual distance equal to the longitudinal extension of a chain link and configured for supporting the articulated joints. In particular, the support elements present a semi-cylindrical receiving seat where the articulated joints can be placed. The hydraulic press is then provided with two opposite main linear hydraulic actuators, for example hydraulic cylinders arranged to move towards the support elements along a direction transversal with respect to the longidutinal direction of the chain. The main linear hydraulic actuators are integrally coupled to two pairs of opposite pushing members arranged to push the plates of one chain link, in particular the end portions of such plates, against the articulated joints placed on the supporting elements so as to connect them. During the assembly procedure, an articulated joint, already bearing a pair of plates having their second end portions connected to the bushing, is placed on the first support element whereas another articulated joint is placed on the second support element; then, the plates of another chain link are coupled to the pushing members with the sealing system already coupled to the annular groove of the first end portions. In this way, once actuated the main linear hydraulic actuators, they move towards the supporting elements and consequently also the pushing members move towards the supporting elements making the coupling between the second end portions of the plates associated with the pushing members and the bushing of the articulated joint placed on the second support element and between the first end portions of the plates associated with the pushing members and the articulated joint already bearing a pair of plates on its bushing. The hydraulic press is provided to move the main linear hydraulic actuators one against the other with a preset pressure. The hydraulic press is generally provided with a mechanical control system comprising elements for adjusting the stroke of the pushing members. During the press setup phase, the mechanical control system is manually adjusted depending on the chain model geometry and configuration.

This regulation and setup is required for each production batch and it depends on several factors as the dimensional characteristics of the chain type to be assembled, the maintenance conditions of the hydraulic press and the operator working at the line. After this setup phase, the traditional assembly method provides samples checks during the production to verify the assembly condition and final checks on non-compliant batches. In light of the above factors and variables, the manually adjustment of the mechanical control system leads to a difficult repeatability and reproducibility of the assembly conditions and of the assembly process. Furthermore the assembly process is not totally monitored. The above drawbacks, moreover, may cause damages to or a malfunction of the sealing systems.

In fact, let us consider, for example, the lubricated chains for which it is necessary to ensure the correct housing for the sealing system.

Since the traditional hydraulic press cannot predict or monitor the friction coefficient between the pieces to be coupled, it is not possible to ensure to obtain the sealing systems in the right nominal condition. Indeed, by using a traditional hydraulic press it is possible that the single joint results to be too loose or too tight.

A too loose condition means that the sealing of the link is compromised; this condition, then, may cause the life of the chain be reduced.

A too tight condition means that the joint is over compressed with heat generation inside the space that houses the sealing system that may cause damages to the sealing system or to the steel ring acting as spacing element. This condition, then, may cause the life of the chain be reduced. Such a control system is for example known from DE 41 21 105 A1.

It is a purpose of the present invention to avoid the aforementioned drawbacks, and in particular to provide a control system and a method for automatically controlling the assembly of a chain so as to ensure a right, repeatable and reproducible chain assembly avoiding an excess or a lack of press fit.

Another purpose of the present invention is to provide a control system capable of automatically adapting to different chain types.

These and other purposes according to the present invention are accomplished by making a control method and a control system as outlined in the independent claims 1 and 7 respectively.

Further characteristics of the control system and of the method for automatically controlling the assembly of a chain are the object of the dependent claims.

The characteristics and advantages of the control system and of the method for automatically controlling the assembly of a chain according to the present invention will become clearer from the following description, given as an example and not for limiting purposes, referring to the attached schematic drawings, in which:

- figure 1 is a block view of a control system according to the present invention

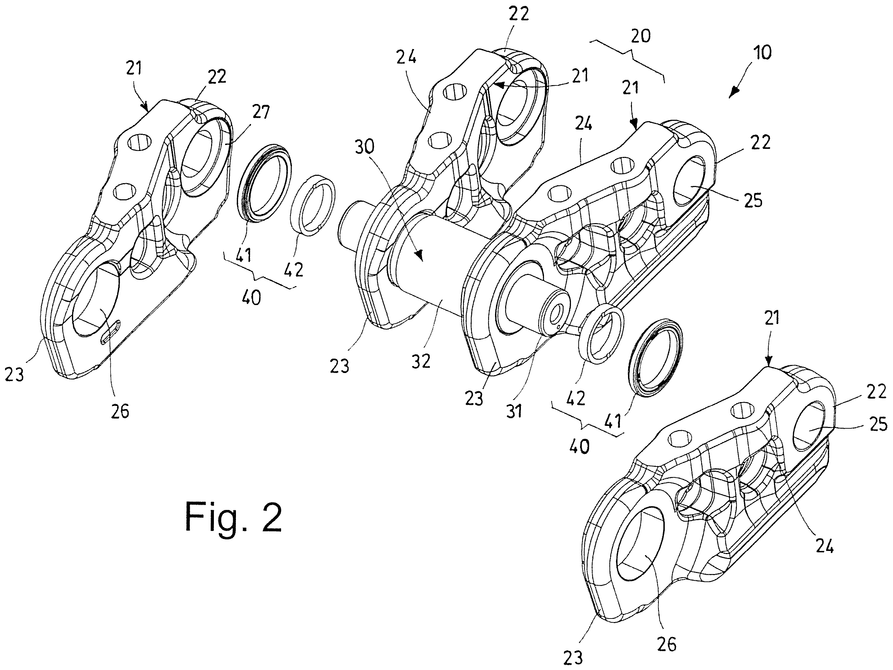

- figure 2 is a partially exploded view of a portion of a chain of the lubricated type;
- figure 3A is a cross-section view of an articulated joint comprised in the chain of figure 2;

- figure 3B is a cross-section view of the circled detail of figure 3A;
- figure 4 is a partially exploded view of a portion of a chain of the grease type;
- figure 5A is a cross-section view of an articulated joint comprised in the chain of figure 4;
- figure 5B is a cross-section view of the circled detail of figure 5A;
- figure 6A is a top view of a hydraulic press partially opened comprised in the control system according to the present invention during a phase of the method according to the present invention;
- figure 6B is a top view of the hydraulic press of figure 6A during a phase subsequent to the phase of figure 6A;
- figure 6C is a top view of the hydraulic press of figure 6A during a phase subsequent to the phase of figure 6B;
- figure 7A is a graph representing the pressure of and the pushing force exerted by the linear hydraulic actuators of the hydraulic press of figure 6A over time during the phases of figure 6A-6C for assembling a chain of the lubricated type;
- figure 7B is a graph representing the pressure of and the pushing force exerted by the linear hydraulic actuators of the hydraulic press of figure 6A over time during the phases of figure 6A-6C for assembling a chain of the grease type.

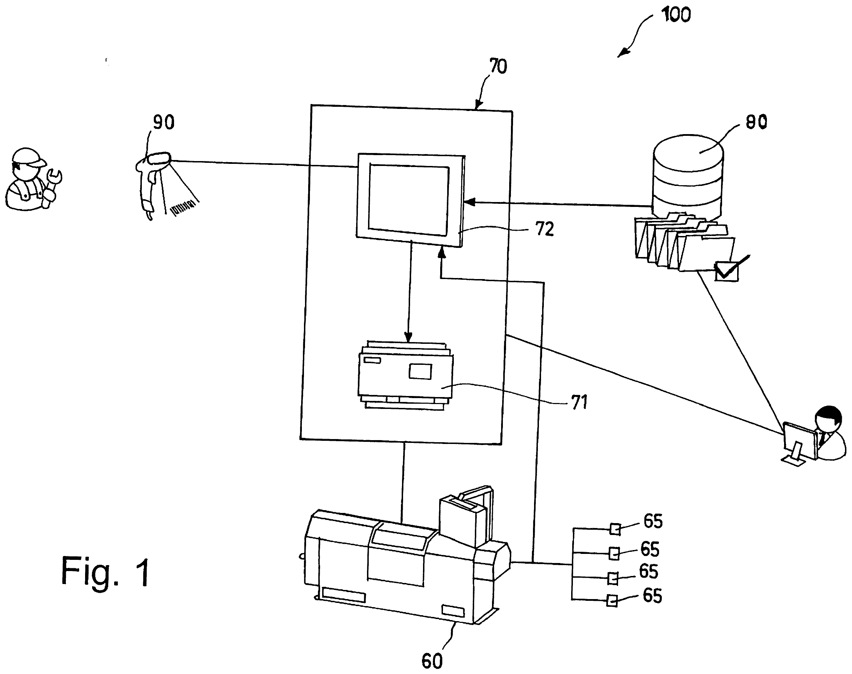

With reference to figure 1 a control system for automatically controlling the assembly of a chain 10 according to the present invention is shown and indicated with reference number 100.

The chain 10 can be of the lubricated type or of the grease type. In all cases the chain 10 comprises a sequence of chain links 20 connected to each other through a plurality of -articulated joints 30 comprising a pin 31 inserted in a bushing 32 so as to be rotatable to each other. Each one of the chain link 20 comprising a pair of two opposite plates 21. Each one of the plates 21 comprises a first end portion 22 and a second end portion 23 parallel to each other and connected to each other by a transversal portions 24. The plates 21 are shaped so that, when the chain link 20 is assembled, the interspace between the first end portions 22 of the pair of the plates 21 of each chain link 20 is greater than the interspace between the second end portions 23.

The first end portion 21 and the second end portion 23 present respective through holes 25, 26 for the connection respectively to the pin 31 and to the bushing 32. Moreover, the first end portion 22 presents an annular groove 27 at its through hole 25 having an internal diameter which is greater with respect to the internal diameter of the through holes 25. The annular grooves 27 house a respective sealing system 40, 50.

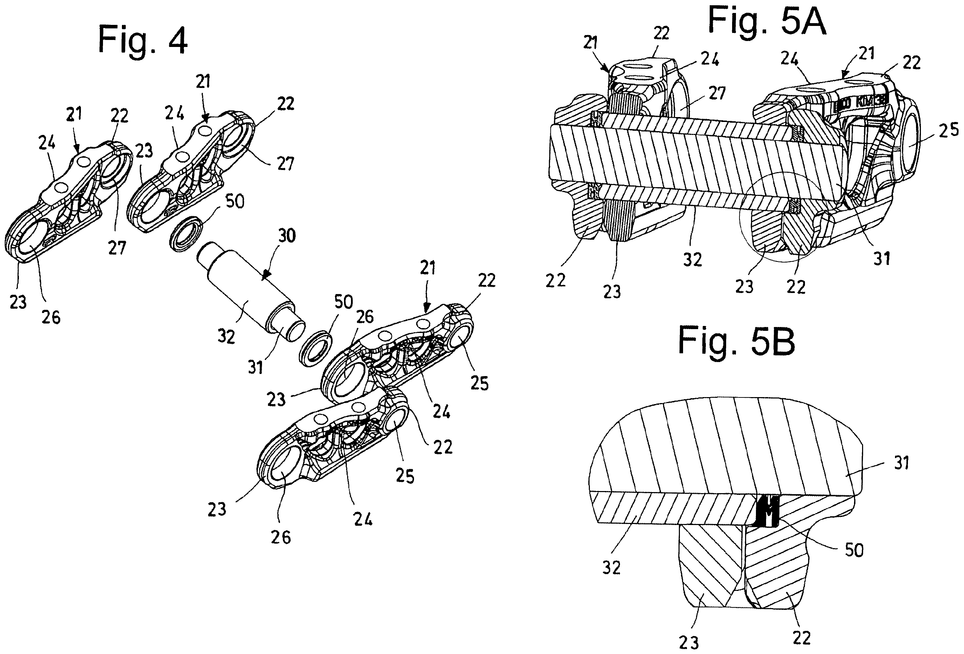

As can be seen in figure 5A, in the chains 10 of the grease type wherein some grease is provided between the inner surface of the bushings 32 and the outer surface of the respective pins 31, the sealing system 50 comprises an seal 50, preferably made of polyurethane, that engages with the ends of the pin 31.

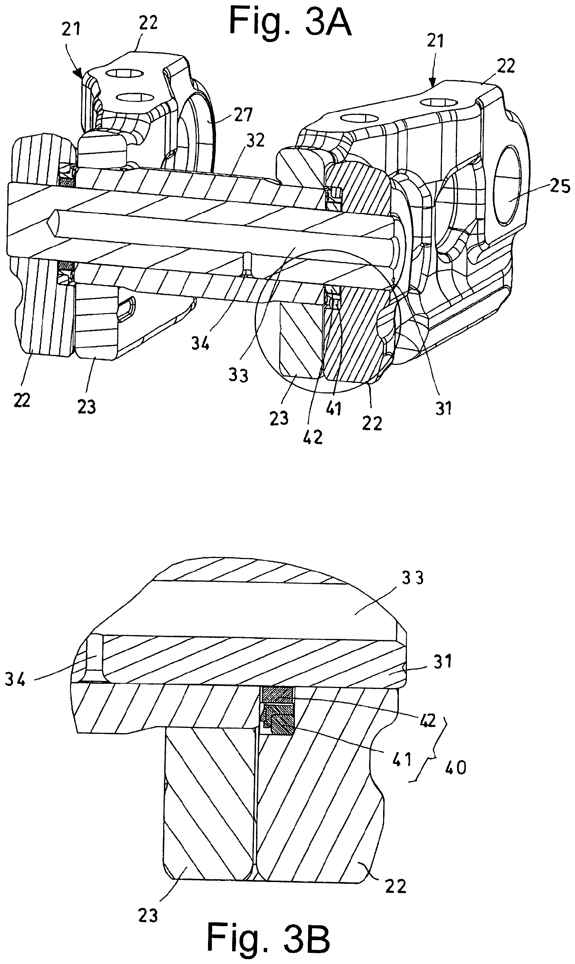

As can be seen in figure 3A in the chains 10 of the lubricated type, the pins 31 present an internal duct 33 opened at one end of the pin 31 and in fluidic communication with the exterior of the pin 31 through one secondary duct 34 at the region covered by the relative bushing 32. Then, the lubricant enters into the duct 33 by the open end of the pin 31 and exits through the secondary duct 34. In this case, the sealing system 40 comprises a seal 41, preferably made of polyurethane, and a spacing ring 42 preferably made of steel. The spacing ring 42 has a width greater than those of the seal 41 so that the spacing ring 42 houses the seal 41 when the chain link 10 is assembled avoiding any overload on the seal 41.

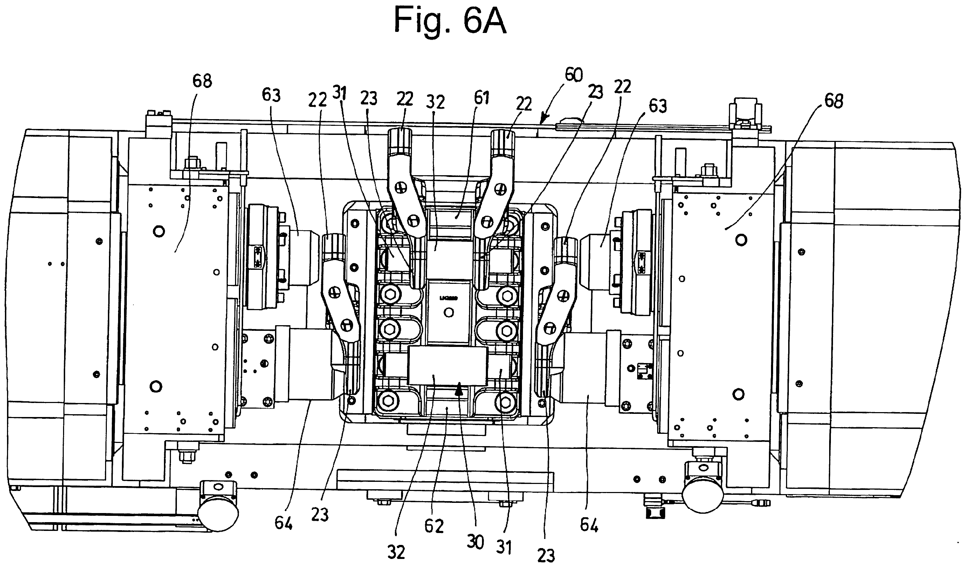

The control system 100 comprises a hydraulic press 60 that comprises an assembly area provided with a first support element 61 and a second support element 62 that can be positioned at a mutual distance equal to the longitudinal extension of the chain link to be assembled and that are configured for supporting the articulated joints 20. As can be seen in figures 6A-6C, the support elements 61, 62 present a semi-cylindrical receiving seat where the articulated joints 20 can be placed. The hydraulic press comprises also two opposite main linear hydraulic actuators 66, for example hydraulic cylinders arranged to move towards the support elements along a direction transversal with respect to the longidutinal direction of the chain when they are actuated. The main linear hydraulic actuators 66 are integrally coupled to a first pair 63 and a second pair 64 of opposite pushing members 63, 64. In particular, the first pair of pushing members 63 are coupled to the respective main linear hydraulic actuators through the interposition of two respective secondary linear hydraulic actuators 67, for example hydraulic cylinders.In the embodiment illustrated in figures 6A-6C the two main linear hydraulic actuators 66 are integrally connected to two respective support frames 68 that in turn are connected to the pushing members 63, 64; in this way, the two main linear hydraulic actuators 66 can move the pushing members 63, 64 by moving the support frame 68. In this case, the secondary linear hydraulic actuators 67 are connected at one side to the support frames 68 and to the other side to the pushing members of the first pair 63. The first pair of pushing members 63 are arranged for being moved towards the first support element 61 along a direction transversal to the longitudinal direction of the chain 10 by the main linear hydraulic actuators 66 for a first stroke and by the secondary linear hydraulic actuators 67 for a second stroke. The second pair of pushing members 64 are arranged for being moved towards the second support element 62 along a direction transversal to the longitudinal direction of the chain 10 by the main linear hydraulic actuators 66 for the first stroke. The pushing members 63, 64 present free end portions configured for coupling with the end portions 21, 22 of the plates 21.

The control system 100 comprises also a plurality of sensors 65 associated to the hydraulic press 60 for detecting the pressure of the linear hydraulic actuators 66, 67, and the pushing force that they exerts when they are actuated.

As for the detection the pressure of such linear hydraulic actuators 66, 67, the plurality of sensors 65, for example, comprises pressure transducers with an output current which are installed in the hydraulic feeding circuit of the linear hydraulic actuators 66, 67. As for the detection of the pushing force exerted by the main linear hydraulic actuators 66, the plurality of sensors 65 comprises, for example, an electronic load cell with an output voltage installed at the main linear hydraulic actuators 66.

The control system 100, then, comprises an electronic processing and control unit 70 associated to the hydraulic press 60 and to the plurality of sensors 65, and a database 80 associated to the electronic processing and control unit 70. The electronic processing and control unit 70 comprises a control module 71 configured for actuating the linear hydraulic actuators 66, 67, and a processing and control module 72 configured for controlling the control module 71.

In the embodiment illustrated in figure 1, the control module 71 is a local control unit as for example a programmable logic computer (PLC), and it is connected to the plurality of sensors 65 and the processing and control module 72 is an external supervisory personal computer. Alternatively, the electronic processing and control unit 70 can be totally embedded in the hydraulic press 60; in this case, for example the processing and control module 72 can be a microprocessor associated to the PLC and provided with means for acquiring the commands or the settings by a user. The database 80 can be configured to allow remote connections from other terminals, like personal computers, smartphone and so on. Hystorical data are stored in the database 80; the hystorical data are relative to measurements of the pushing force exerted by the linear hydraulic actuators and of the pressure in the linear hydraulic actuators performed during past assembling processes of chain of different types and geometries. In the present description for geometry of a chain it is indended to indicate the shape and the dimensions of the chain, more in particular of each chain link of the chain. Preferably, the control system 100 comprises an user interface system 90 associated to the electronic processing and control unit 70 and configured for selecting the type and geometry of the chain to be assembled. For example, the user interface system 90 can comprise a bar code reader. In this case, the information about the type and geometry of the chain to be assembled are stored in the database 80 associated with an indentifier that can be extracted by reading a bar code associated to the chain. In this case, moreover, the identifier and the type and geometry of the chain to be assembled are stored in association with respective historical data relative to measurements performed during past assembly processes of chains of the selected type and geometry.

The control system 100 is configured for automatically controlling the assembly of the chain according to the control method according to the present invention that will be hereinafter described.

The control method, in fact, comprises the step of providing the hydraulic press 60 and the database 80. Then, an articulated joint 30 already bearing a pair of plates 21 having their second end portions 23 connected to the bushing 32 is provided on the first support element 61 of the hydraulic press 60. Then, another articulated joint 30 is provided on the second support element 62 of the hydraulic press 60. Then, a pair of plates 20 with sealing systems 40, 50 housed in respective first end portions 22 is provided. As previously explained, the sealing systems depend on the type of the chain to be assembled. In any case, the control method comprises the step of associating each one of the two plates 20 with the pushing members 63, 64 laying on the same side with respect to the support elements 61, 62 as can be observed in figure 6A. In this way the plates 20 can be moved by the pushing members 63, 64. The control method comprises, then, the step of actuating the linear hydraulic actuators 66, 67 so that they move the second end portions 23 of the plates 20 associated with the pushing members of the second pair 64 against the articulated joint 30 on the second support element 62 and the first end portions 22 of the plates 20 associated with the pushing members of the first pair 63 against the articulated joint 30 already bearing a pair of plates 20 on its bushing 32 on the first support element 61. The control method, according to the present invention, provides the step of detecting over time the pushing force exerted by and the pressure of the linear hydraulic actuators 66, 67 through the plurality of sensors 65, during the action of the linear hydraulic actuators 66, 67. Advantageously, the control method provides that the actuating of the linear hydraulic actuators 66 is controlled by the electronic processing and control unit 70 so that in a first step only the main linear hydraulic actuators 66 are actuated until a first stop point is reached, and in a subsequent second step the secondary linear hydraulic actuators 67 are actuated until a second stop point is reached.

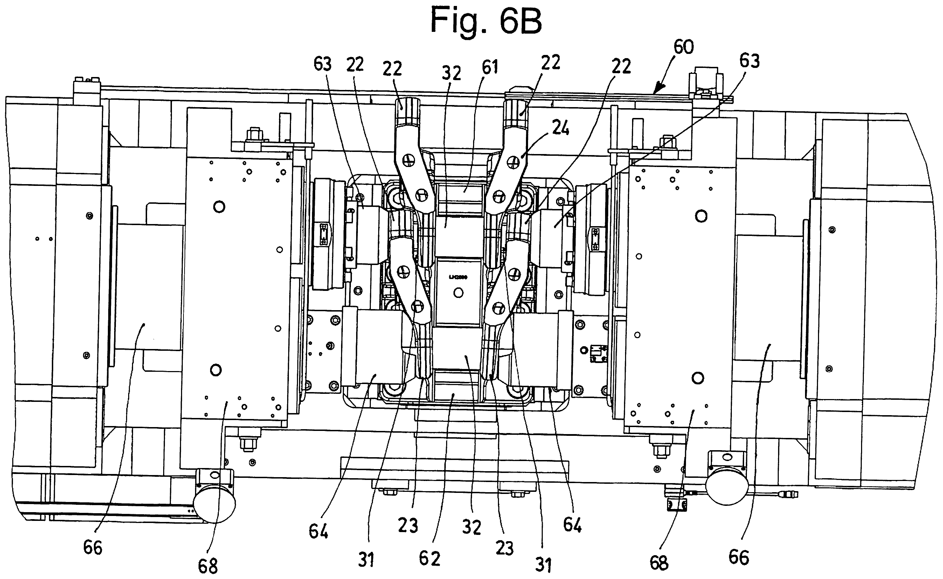

The first stop point corresponds to the time at which only the second end portions 23 of the plates 21 associated with the pushing members 63, 64 couple with the bushing 32 of the articulated joint 30 placed on the second support element 62. At the first stop point, then, the first end portions of the plates 21 associated with the pushing members 63, 64 are not coupled to the pin 31 of the articulated joint 30 placed on the first support element 61, as can be seen in figure 6B.

The pushing members 63, 64 are positioned with respect to the support element 61, 62 so that in the first actuating step the coupling between the plates 20 and the articulated joint 30 on the second support element 62 is obtained before than the coupling between the plates 20 and the articulated joint 30 on the first support element 62 that, instead, is obtained in the second actuating step.

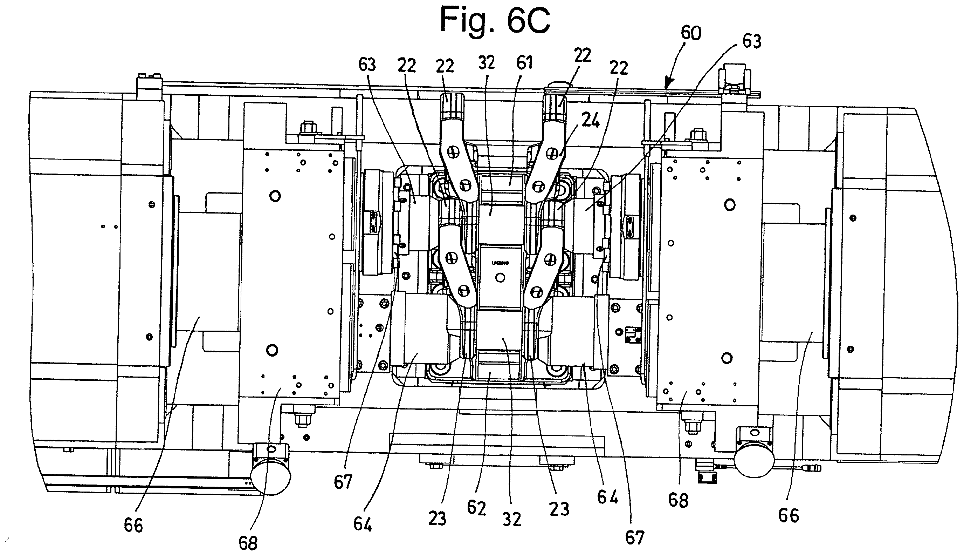

In fact, the second stop point corresponds to the time at which the first end portions 22 of the plates 21 associated with the pushing members 63, 64 couple with the pin 31 of the articulated joint 30 placed on the first support element 61 as can be seen in figure 6c.

Advantageously, the first stop point and the second stop point are determined in real time by the electronic processing and control unit 70 on the basis of the detected pushing force, the detected pressure and reference parameters predetermined on the basis of the historical data relative to the type and geometry of the chain to be assembled. In particular, the stop points are determined by the processing and control module 72; this means that the processing and control module 72 monitors the measurements of the sensors 65 and at the reaching of the stop points sends a relative control signal to the control module 71 to control the actuating of the linear hydraulic actuators 66, 67.

Preferably, the first stop point is determined as the time at which the following condition is met:

- the variation over time of the detected pressure of the main linear hydraulic actuators 66 becomes greater than a first reference threshold parameter.

This condition is expressed by the following expressions:

$$\frac{\Delta p_{mlha1}}{\Delta t} > k_1$$

$$\frac{\Delta p_{mlha2}}{\Delta t} > k_1$$

wherein $p_{mlha1}$ and $p_{mlha2}$ are the pressures of the main linear hydraulic actuators, t is the time and $k_1$ is the first reference threshold parameter obtained from the hystorical data.

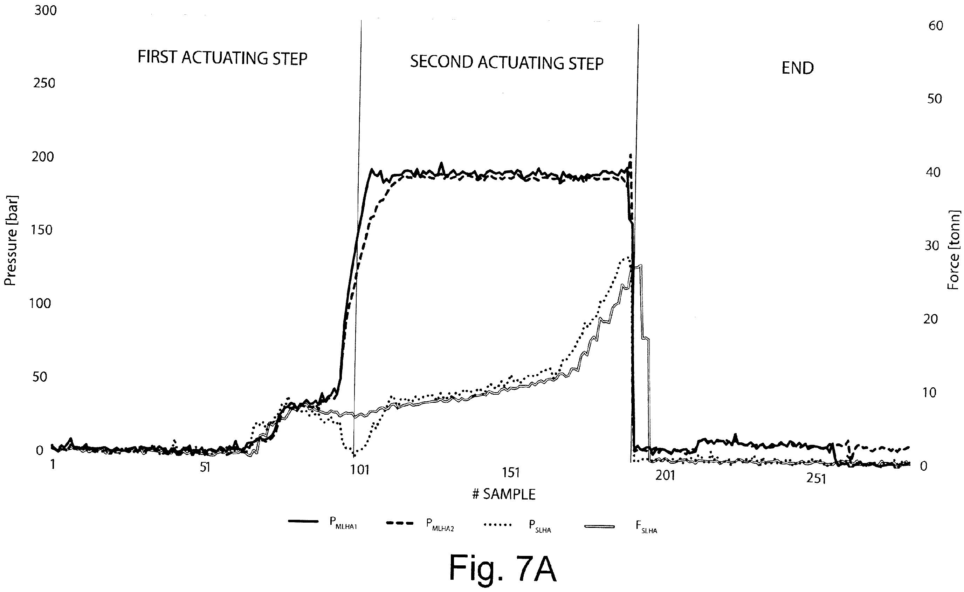

In particular, once the sampling frequency of the sensors 65 has been set to f=1/t, the time interval is calculated as $\Delta t = n \cdot t$ wherein n is the number of the samples of the detections of the sensors 65 made during the time interval, for example n=9. The actuating step can be seen as a sequence of a plurality of time intervals Dt. During the actuating step, the processing and control module 72, then, calculates the variation of the pressure of the main linear hydraulic actuators 66 for each time interval. In particular the samples are linearly interpolated obtaining a straight line representing the variation of the pressure over time; the processing and control module 72 calculates the angular coefficient of the straight line and, then, compares such a calculated angular coefficient with the first reference threshold parameter $k_1$. The first stop point corresponds to the time at which the calculated angular coefficients of the straight lines respresenting the variation of the pressures of the main linear hydraulic actuators 66 results to be greater than the first reference threshold parameter $k_1$. The first reference parameter $k_1$ is obtained by the historical data through statistical analysis and represents the value beyond which the optimal coupling is likely obtained. As can be observed in graph of figure 7A, at the first stop point, the slope of the curves representing the variation over time of the pressure suddenly inscreases meaning that the coupling between the second end portions 23 of the plates 21 and the bushing 32 of the articulated joint 30 on the second support element 62 has been reached. The pressure of the main linear hydraulic actuators 66 increases when the friction between the second end portions 23 of the plates 21 and the bushing 32 becomes big as if there is an abutment. After the first stop point there is a transitory period for passing from the first actuating step to the second actuating step; this transitory period ends at the time at which the pressure of the main linear hydraulic actuators becomes substantially constant to keep in position the pushing members 63, 64. Preferably, if the chain 10 is of the lubricated type, the second stop point is determined as the time at which the following two conditions is met:

- the variation over time of the detected pressure of the secondary linear hydraulic actuators 67 becomes greater than a second reference threshold parameter;
- the detected force exerted by the secondary linear hydraulic actuators 67 is smaller than a reference maximum force value.

These conditions are expressed by the following expressions:

$$\frac{\Delta p_{slha}}{\Delta t} > k_2$$

$$F_{slha} < F_{lmax}$$

wherein $p_{slha}$ is the pressure of the secondary linear hydraulic actuators, t is the time, $k_2$ is the second reference threshold parameter obtained from the hystorical data, $F_{slha}$ is the pushing force exerted by the secondary linear hydraulic actuators and Fimax is the reference maximum force value.

As for the calculation of the first stop point, once the sampling frequency of the sensors 65 has been set to f=1/t, the time interval is calculated as $\Delta t = n \cdot t$ wherein n is the number of the samples of the detections of the sensors 65 made during the time interval. During the second actuating step, the processing and control module 72, then, calculates the variation of the pressure of the secondary linear hydraulica actuators 67 for each time interval. As previously described, the samples are linearly interpolated obtaining a straight line representing the variation of the pressure over time; the processing and control module 72 calculates the angular coefficient of the straight line and, then, compares such a calculated angular coefficient with the second reference threshold parameter $k_2$. When the calculated angular coefficients of the straight lines respresenting the variation of the pressures of the secondary linear hydraulic actuators 67 results to be greater than the second reference threshold parameter $k_2$, the coupling between the first end portions 22 of the plates 21 and the pin 31 of the articulated joint 30 on the first support element 61 has been reached. This corresponds to the second stop point if the pushing force exerted by the secondary linear hydraulic actuators 67 does not exceed the reference maximum force value $F_{max}$. The second reference parameter $k_2$ is obtained by the historical data through statistical analysis and represents the value beyond which the optimal coupling is likely obtained. As can be seen in figure 7A, the second stop point corresponds to the point at which the slope of the curves representing the pressure and the pushing force of the secondary linear hydraulic actuators 67 suddenly increases. At that point, in fact, the first end portions 22 of the plates 21 abut against the spacing ring 42 of the sealing system 40.

The reference maximum force value Fimax is the value obtained by the historical data that must not be exceeded in order to avoid any possible damages on the sealing system.

The processing and control module 72 also monitors the value of the pushing force exerted by the secondary linear hydraulic actuators and compare it with the reference maximum force value $F_{lmax}$.

Preferably, the control method provides the step of stopping the second actuating step if this pushing force exceeds the reference maximum force value $F_{max}$

before the condition on the pressure is satisfied.

Preferably, if the chain 10 is of the grease type, the second stop point is the time at which the following two conditions are met:

- the time is comprised between a reference minimum time value and a reference maximum time value;
- the detected force exerted by the secondary linear hydraulic actuators 67 is comprised between a reference minimum force value and a reference maximum force value. These conditions are expressed by the following expressions:

$$t_{min} < t < t_{max}$$

$$F_{gmin} < F_{slha} < F_{gmax}$$

wherein $F_{slha}$ is the pushing force exerted by the secondary linear hydraulic actuators, t is the time, $t_{min}$ is the reference minimum time value, $t_{max}$ is the reference maximum time value, $F_{gmin}$ is the reference minimum force value and $F_{gmax}$ is the reference maximum force value.

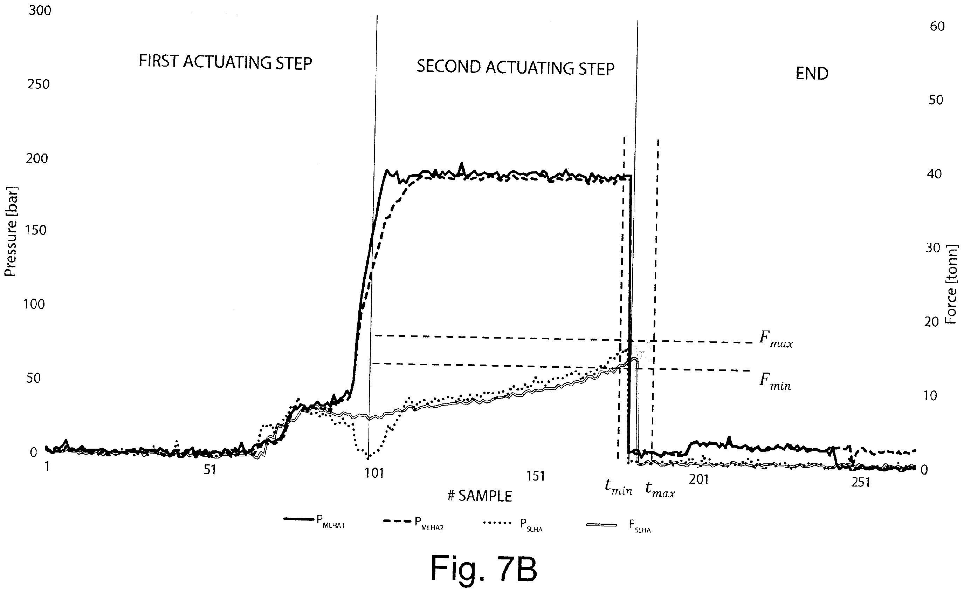

The second stop point, then, is the time at which the curve representing the variation over time of the pushing force enters in the area depicted in figure 7B. The reference minimum time value $t_{min}$, the reference maximum time value $t_{max}$, the reference minimum force value $F_{gmin}$ and the reference maximum force value $F_{gmax}$ are obtained by the historical data through statistical analysis and defines reference time and force interval. The area defined by these intervals represents the the area in which the optimal coupling is likely obtained.

The reference maximum force value $F_{gmax}$ and the reference maximum time value $t_{max}$ are the values that must not be exceeded in order to avoid any possible damages on the sealing system.

Preferably, the control method provides the step of stopping the second actuating step if the pushing force exerted by the secondary linear hydraulic actuators 67 or the time exceed respectively the reference maximum force value $F_{gmax}$ or the the reference maximum time value $t_{max}$.

Preferably, the control method comprises the steps:

- selecting the type and geometry of the chain 10 to be assembled through the user interface system 90;
- downloading the reference parameters and reference values relative to the type and the geometry selected. In this way, the control method adapts to the type and the geometry of the chain.

Preferably, the control method provides to store the detected data in the database in order to be used for calculation of new reference parameters and values or for statistical analysis, productivity analysis, product traceability and so on. As it has been described the processing and control unit 70 of the control, more in particular the processing and control module 72 is provided with a computer program comprising code portions for the determination of the first stop point and the second stop point and for controlling the actuating steps of the linear hydraulic actuators 66, 67 as described above.

The control method according to the present invention is repeated for each chain link to be connected until the chain is obtained.

The control system and the control method according to the present invention are capable of ensuring the right assembly and the stability of the assembly process, avoiding situations of excess or lack of press fit. In fact, they allow to reduce the human intervention and the several adjustements from subjective evaluations during the machine setup and during the chain production.

The assembly process, then, is repeatable and reproducible.

The control method, according to the present invention, also allows to reduce the hydraulic press setup time, to reduce the possibility of re-works and scraps for quality acceptance, and to optimize the chain assembly time.

## Claims

1. Control method for automatically controlling the assembly of a chain (10), wherein the chain (10) comprises a sequence of chain links (20) connected to each other through a plurality of articulated joints (30) comprising a pin (31) inserted in a bushing (32) so as to be rotatable to each other, each one of said chain link (20) comprising a pair of two opposite plates (21), each one of the plates (21) comprising a first end portion (22) and a second end portion (23) presenting respective through holes (25, 26) for the connection respectively to the pin (31) and to the bushing (32), wherein the first end portion (22) presents an annular groove (27) at its through hole (25) housing a sealing system (40, 50), said plates (21) being shaped so that the interspace between the first end portions (22) of the pair of plates (21) of each chain link (20) is greater than the interspace of the second end portions (23) of the pair of plates (21) of each chain link (20), said control method comprising the steps:

   - providing a hydraulic press (60) comprising

     - an assembly area provided with a first support element (61) and a second support element (62) configured for being positioned along a longitudinal direction of the chain (10) to be assembled at a mutual distance equal to the longitudinal extension of a chain link (20) of the chain to be assembled;
- two opposite main linear hydraulic actuators (66) arranged for moving towards the support elements (61, 62) along a direction transversal to the longitudinal direction of the chain when they are actuated, said main linear hydraulic actuators (66) being integrally coupled to a first pair (63) and to a second pair (64) of pushing members, the pushing members of said first pair (63) being coupled to the respective main linear hydraulic actuators (66) through the interposition of two respective secondary linear hydraulic actuators (67) arranged for moving towards the first support element (61) along a direction transversal to the longitudinal direction of the chain when they are actuated;

- providing a database (80) in which historical data relative to measurements of the pushing force exerted by the linear hydraulic actuators and of the pressure in the linear hydraulic actuators performed during past assembling processes for different types and geometries of chains are stored;
- providing an articulated joint (30) already bearing a pair of plates (21) having their second end portions (23) connected to the bushing (32) on the first support element (61);
- providing an articulated joint (30) on said second support element (62);
- providing a pair of plates (21) with sealing systems (40, 50) housed in respective first end portions (22), associating each one of the two plates (21) with the pushing members (63, 64) laying on the same side with respect to the support elements (61, 62);
- actuating the linear hydraulic actuators (66, 67) so that they move the second end portions (23) of the plates (21) associated with the pushing members (63, 64) against the articulated joint (30) on the second support element (62) and the first end portions (22) of the plates (21) associated with the pushing members (63, 64) against the articulated joint (30) already bearing a pair of plates (21) on its bushing (32) on the first support element (32) ;
- during the action of the linear hydraulic actuators (66, 67), detecting over time the pushing force exerted by and the pressure of the linear hydraulic actuators (66, 67) through a plurality of sensors (65);
- the actuating of the linear hydraulic actuators (66, 67) being controlled by an electronic processing and control unit (70) so that in a first step only the main linear hydraulic actuators (66) are actuated until a first stop point is reached, and in a subsequent second step the secondary linear hydraulic actuators (67) are actuated until a second stop point is reached, the first stop point and the second stop point being determined by the electronic processing and control unit on the basis of the detected pushing force, the detected pressure and reference parameters predetermined on the basis of the historical data relative to the type and the geometry of the chain to be assembled.

2. Control method according to claim 1 wherein the first stop point is the time at which the following condition is met:
- the variation over time of the detected pressure of the main linear hydraulic actuators (66) becomes greater than a first reference threshold parameter $(k_1)$.

3. Control method according to claim 2 wherein if the chain (10) is of the lubricated type, the second stop point is the time at which the following two conditions are met:

- the variation over time of the detected pressure of the secondary linear hydraulic actuators (67) becomes greater than a second referencereference threshold parameter $(k_2)$;
- the detected force exerted by the secondary linear hydraulic actuators (67) is smaller than a referencereference maximum force value $(F_{max})$.

4. Control method according to claim 3 comprising the step of stopping the second actuating step if the pushing force exerted by the secondary linear hydraulic actuators (67) exceeds the reference maximum force value $(F_{max})$ before the condition on the pressure is satisfied.

5. Control method according to claim 2 wherein if the chain (10) is of the grease type, the second stop point is the time at which the following two conditions are met:

- the time is comprised between a reference minimum time value $(t_{min})$ and a reference maximum time value (tmax);
- the detected force exerted by the secondary linear hydraulic actuators (67) is comprised between a reference minimum force value $(F_{min})$ and a reference maximum force value $(F_{max})$ .

6. Control method according to claim 5 comprising the step of stopping the second actuating step if the pushing force exerted by the secondary linear hydraulic actuators (67) or the time exceed respectively the reference maximum force value $(F_{gmax})$ or the the reference maximum time value ($t_{max}$).

7. Control method according to any one of the preceding claims comprising the steps:

- selecting the type and geometry of the chain (10) to be assembled through an user interface system (90);
- downloading the reference parameters relative to the type and the geometry selected.

8. Control method according to claim 5 comprising the step:

- storing in the database (80) the detected data.

9. Control system (100) for automatically controlling the assembly of a chain (10) according to the control method according to any one of the preceding claims, said control system (100) comprising:

- a hydraulic press (60) comprising

- an assembly area provided with a first support element (61) and a second support element (62) configured for being positioned along a longitudinal direction of the chain (10) at a mutual distance equal to the longitudinal extension of a chain link (20) of the chain (10) to be assembled
- two opposite main linear hydraulic actuators (66) arranged for moving towards the support elements (61, 62) along a direction transversal to the longitudinal direction of the chain when they are actuated, said main linear hydraulic actuators (66) being integrally coupled to a first pair (63) and to a second pair (64) of pushing members, the pushing members of said first pair (63) being coupled to the respective main linear hydraulic actuators (66) through the interposition of two respective secondary linear hydraulic actuators (67) arranged for moving towards the first support element (61) along a direction transversal to the longitudinal direction of the chain when they are actuated;

- a plurality of sensors (65) associated to the hydraulic press (60);
- an electronic processing and control unit (70) associated to the hydraulic press (60) and to the plurality of sensors (65);
- a database (80) associated to the electronic processing and control unit (70).

10. Control system (100) according to claim 9 comprising an user interface system (90) associated to the electronic processing and control unit (70) and configured for selecting the type and geometry of the chain to be assembled.

11. Computer program loadable in the internal memory of a digital computer, comprising code portions for determining the first stop point and the second stop point and for controlling the actuating steps according to any one of the claims 1-7 when said program is actuated by said computer.

**Patentansprüche**

1. Steuerungsverfahren zur automatischen Steuerung der Anordnung einer Kette (10), wobei die Kette (10) eine Folge von Kettengliedern (20) umfasst, die miteinander durch eine Vielzahl von Gelenkverbindungen (30) verbunden sind, die einen in eine Buchse (32) eingesetzten Stift (31) umfassen, so dass sie zueinander drehbar sind, wobei jedes der Kettenglieder (20) ein Paar von zwei gegenüberliegenden Platten (21) umfasst, wobei jede der Platten (21) einen ersten Endabschnitt (22) und einen zweiten Endabschnitt (23) umfasst, die jeweilige Durchgangslöcher (25, 26) zur Verbindung mit dem Bolzen (31) bzw. der Buchse (32) aufweisen, wobei der erste Endabschnitt (22) an seinem Durchgangsloch (25) eine ringförmige Nut (27) aufweist, die ein Dichtungssystem (40, 50) aufnimmt, wobei die Platten (21) so geformt sind, dass der Zwischenraum zwischen den ersten Endabschnitten (22) des Paares von Platten (21) jedes Kettenglieds (20) größer ist als der Zwischenraum der zweiten Endabschnitte (23) des Paares von Platten (21) jedes Kettenglieds (20), wobei das Steuerungsverfahren die Schritte umfasst:

- Bereitstellen einer hydraulischen Presse (60) umfassend

- einen Anordnungsbereich, der mit einem ersten Stützelement (61) und einem zweiten Stützelement (62) versehen ist, die so konfiguriert sind, dass sie entlang einer Längsrichtung der zu montierenden Kette (10) in einem gegenseitigen Abstand positioniert werden, der gleich der Längsausdehnung eines Kettenglieds (20) der zu montierenden Kette ist;
- zwei gegenüberliegende lineare hydraulische Hauptaktoren (66), die so angeordnet sind, dass sie sich in Richtung der Stützelemente (61, 62) entlang einer Richtung quer zur Längsrichtung der Kette bewegen, wenn sie betätigt werden, wobei die linearen hydraulischen Hauptaktoren (66) integral mit einem ersten Paar (63) und einem zweiten Paar (64) von Schiebeelementen gekoppelt sind, wobei die Schiebeelemente des ersten Paares (63) mit den jeweiligen linearen hydraulischen Hauptaktoren (66) durch die Zwischenschaltung von zwei jeweiligen linearen hydraulischen Nebenaktoren (67) gekoppelt sind, die so angeordnet sind, dass sie sich in Richtung des ersten Stützelements (61) entlang einer Richtung quer zur Längsrichtung der Kette bewegen, wenn sie betätigt werden;

- Bereitstellen einer Datenbank (80), in der historische Daten in Bezug auf Messungen der von den linearen hydraulischen Aktoren ausgeübten Schubkraft und des Drucks in den linearen hydraulischen Aktoren, die während vergangener Anordnungsprozesse für verschiedene Typen und Geometrien von Ketten durchgeführt wurden, gespeichert sind;
- Bereitstellen eines Gelenks (30), das bereits ein Paar von Platten (21) trägt, deren zweite Endabschnitte (23) mit der Buchse (32) auf dem ersten Stützelement (61) verbunden sind;
- Bereitstellen eines Gelenks (30) an dem zweiten Stützelement (62);
- Bereitstellen eines Paares von Platten (21) mit Dichtungssystemen (40, 50), die in den jeweiligen ersten Endabschnitten (22) untergebracht sind, wobei jede der beiden Platten (21) mit den Druckelementen (63, 64) verbunden wird, die in Bezug auf die Stützelemente (61, 62) auf derselben Seite liegen;
- Betätigen der linearen hydraulischen Aktoren (66, 67), so dass sie die zweiten Endabschnitte (23) der Platten (21), die den Druckelementen (63, 64) zugeordnet sind, gegen das Gelenk (30) auf dem zweiten Stützelement (62) und die ersten Endabschnitte (22) der Platten (21), die den Druckelementen (63, 64) zugeordnet sind, gegen das Gelenk (30) bewegen, das bereits ein Paar von Platten (21) auf seiner Buchse (32) auf dem ersten Stützelement (32) trägt;
- während der Wirkung der linearen hydraulischen Aktoren (66, 67), zeitliches Erfassen der von den linearen hydraulischen Aktoren (66, 67) ausgeübten Schubkraft und des Drucks über eine Vielzahl von Sensoren (65);
- wobei die Betätigung der linearen hydraulischen Aktoren (66, 67) durch eine elektronische Verarbeitungs- und Steuereinheit (70) so gesteuert wird, dass in einem ersten Schritt nur die linearen hydraulischen Hauptaktoren (66) bis zum Erreichen eines ersten Stopppunktes betätigt werden, und in einem anschließenden zweiten Schritt die linearen hydraulischen Nebenaktoren (67) bis zum Erreichen eines zweiten Stopppunktes betätigt werden, wobei der erste Stopppunkt und der zweite Stopppunkt von der elektronischen Verarbeitungs- und Steuereinheit auf der Grundlage der erfassten Schubkraft, des erfassten Drucks und von Referenzparametern bestimmt werden, die auf der Grundlage der historischen Daten in Bezug auf den Typ und die Geometrie der zu montierenden Kette vorgegeben sind.

**2.** Steuerungsverfahren nach Anspruch 1, wobei der erste Stopppunkt der Zeitpunkt ist, an dem die folgende Bedingung erfüllt ist:

- die zeitliche Schwankung des erfassten Drucks der wichtigsten linearen hydraulischen Aktoren (66) wird größer als ein erster Referenzschwellenparameter ($k_1$).

**3.** Steuerungsverfahren nach Anspruch 2, wobei, wenn die Kette (10) vom geschmierten Typ ist, der zweite Stopppunkt der Zeitpunkt ist, zu dem die folgenden zwei Bedingungen erfüllt sind:

- die zeitliche Veränderung des erfassten Drucks der linearen hydraulischen Nebenaktoren (67) wird größer als ein zweiter Referenzschwellenparameter ($k_2$);
- die ermittelte Kraft, die von den linearen hydraulischen Nebenaktoren (67) ausgeübt wird, ist kleiner als ein maximaler Referenzkraftwert ($F_{max}$).

**4.** Steuerungsverfahren nach Anspruch 3, das den Schritt des Stoppens des zweiten Betätigungsschritts umfasst, wenn die von den linearen hydraulischen Nebenaktoren (67) ausgeübte Schubkraft den maximalen Referenzkraftwert ($F_{max}$) überschreitet, bevor die Bedingung bezüglich des Drucks erfüllt ist.

**5.** Steuerungsverfahren nach Anspruch 2, wobei, wenn die Kette (10) vom Fetttyp ist, der zweite Stopppunkt der Zeitpunkt ist, an dem die beiden folgenden Bedingungen erfüllt sind:

- die Zeit liegt zwischen einem minimalen Referenzzeitwert ($t_{min}$) und einem maximalen Referenzzeitwert ($t_{max}$) ;
- die erfasste Kraft, die von den linearen hydraulischen Nebenaktoren (67) ausgeübt wird, liegt zwischen einem minimalen Referenzkraftwert ($F_{min}$) und einem maximalen Referenzkraftwert ($F_{max}$) .

**6.** Steuerungsverfahren nach Anspruch 5, das den Schritt des Stoppens des zweiten Betätigungsschritts umfasst, wenn die von den linearen hydraulischen Nebenaktoren (67) ausgeübte Schubkraft oder die Zeit den maximalen Referenzkraftwert

($F_{gmax}$) bzw. den maximalen Referenzzeitwert ($t_{max}$) überschreitet.

7. Steuerungsverfahren nach einem der vorstehenden Ansprüche, umfassend die Schritte:

   - Auswählen des Typs und der Geometrie der zu montierenden Kette (10) über ein Benutzerschnittstellensystem (90);
   - Herunterladen der Referenzparameter in Bezug auf den ausgewählten Typ und die ausgewählte Geometrie.

8. Steuerungsverfahren nach Anspruch 5, umfassend den Schritt:

   - Speichern der erfassten Daten in der Datenbank (80).

9. Steuersystem (100) zur automatischen Steuerung der Anordnung einer Kette (10) gemäß dem Steuerungsverfahren nach einem der vorstehenden Ansprüche, wobei das Steuersystem (100) umfasst:

   - eine hydraulische Presse (60), umfassend

     - einen Anordnungsbereich, der mit einem ersten Stützelement (61) und einem zweiten Stützelement (62) versehen ist, die so konfiguriert sind, dass sie entlang einer Längsrichtung der Kette (10) in einem gegenseitigen Abstand positioniert werden, der gleich der Längsausdehnung eines Kettenglieds (20) der zu montierenden Kette (10) ist
     - zwei gegenüberliegende lineare hydraulische Hauptaktoren (66), die so angeordnet sind, dass sie sich in Richtung der Stützelemente (61, 62) entlang einer Richtung quer zur Längsrichtung der Kette bewegen, wenn sie betätigt werden, wobei die linearen hydraulischen Hauptaktoren (66) integral mit einem ersten Paar (63) und einem zweiten Paar (64) von Schiebeelementen gekoppelt sind, wobei die Schiebeelemente des ersten Paares (63) mit den jeweiligen linearen hydraulischen Hauptaktoren (66) durch die Zwischenschaltung von zwei jeweiligen linearen hydraulischen Nebenaktoren (67) gekoppelt sind, die so angeordnet sind, dass sie sich in Richtung des ersten Stützelements (61) entlang einer Richtung quer zur Längsrichtung der Kette bewegen, wenn sie betätigt werden;

   - eine Vielzahl von Sensoren (65), die mit der hydraulischen Presse (60) verbunden sind;
   - eine elektronische Verarbeitungs- und Steuereinheit (70), die mit der hydraulischen Presse (60) und der Vielzahl von Sensoren (65) verbunden ist;
   - eine Datenbank (80), die mit der elektronischen Verarbeitungs- und Steuereinheit (70) verbunden ist.

10. Steuerungssystem (100) nach Anspruch 9, umfassend ein Benutzerschnittstellensystem (90), das mit der elektronischen Verarbeitungs- und Steuereinheit (70) verbunden ist und zum Auswählen des Typs und der Geometrie der zu montierenden Kette konfiguriert ist.

11. Computerprogramm, das in den internen Speicher eines Digitalcomputers ladbar ist und Codeabschnitte zur Bestimmung des ersten und des zweiten Stopppunktes und zur Steuerung der Betätigungsschritte nach einem der Ansprüche 1-7 umfasst, wenn das Programm von dem Computer betätigt wird.

## Revendications

1. Procédé de commande pour commander automatiquement l'assemblage d'une chaîne (10), dans lequel la chaîne (10) comprend une séquence de maillons de chaîne (20) reliés les uns aux autres par le biais d'une pluralité d'articulations (30) comprenant une broche (31) insérée dans une douille (32) de façon à être rotatives l'une par rapport à l'autre, chacun desdits maillons de chaîne (20) comprenant une paire de deux plaques opposées (21), chacune des plaques (21) comprenant une première partie d'extrémité (22) et une seconde partie d'extrémité (23) présentant des trous traversants (25, 26) respectifs pour la liaison respectivement à la broche (31) et à la douille (32), dans lequel la première partie d'extrémité (22) présente une rainure annulaire (27) au niveau de son trou traversant (25) recevant un système d'étanchéité (40, 50), lesdites plaques (21) étant façonnées de sorte que l'interstice entre les premières parties d'extrémité (22) de la paire de plaques (21) de chaque maillon de chaîne (20) soit plus grand que l'interstice des secondes parties d'extrémité (23) de la paire de plaques (21) de chaque maillon de chaîne (20), ledit procédé de commande comprenant les étapes consistant à :

   - fournir une presse hydraulique (60) comprenant

     - une zone d'assemblage munie d'un premier élément de support (61) et d'un second élément de support (62) configurés pour être positionnés le long d'une direction longitudinale de la chaîne (10) à assembler à une distance mutuelle égale à l'extension longitudinale d'un maillon de chaîne (20) de la chaîne à assembler ;

- deux actionneurs hydrauliques linéaires principaux (66) opposés agencés pour se déplacer vers les éléments de support (61, 62) le long d'une direction transversale à la direction longitudinale de la chaîne lorsqu'ils sont actionnés, lesdits actionneurs hydrauliques linéaires principaux (66) étant couplés de manière solidaire à une première paire (63) et à une seconde paire (64) d'organes de poussée, les organes de poussée de ladite première paire (63) étant couplés aux actionneurs hydrauliques linéaires principaux (66) respectifs par le biais de l'interposition de deux actionneurs hydrauliques linéaires secondaires (67) respectifs agencés pour se déplacer vers le premier élément de support (61) le long d'une direction transversale à la direction longitudinale de la chaîne lorsqu'ils sont actionnés ;

- fournir une base de données (80) dans laquelle des données historiques, se rapportant à des mesures de la force de poussée exercée par les actionneurs hydrauliques linéaires et de la pression dans les actionneurs hydrauliques linéaires réalisées au cours de processus d'assemblage antérieurs pour différents types et géométries de chaînes, sont stockées ;

- fournir une articulation (30) portant déjà une paire de plaques (21) ayant leurs secondes parties d'extrémité (23) reliées à la douille (32) sur le premier élément de support (61) ;

- fournir une articulation (30) sur ledit second élément de support (62) ;

- fournir une paire de plaques (21) ayant des systèmes d'étanchéité (40, 50) reçus dans des premières parties d'extrémité (22) respectives, associant chacune des deux plaques (21) avec les organes de poussée (63, 64) se trouvant sur le même côté par rapport aux éléments de support (61, 62) ;

- actionner les actionneurs hydrauliques linéaires (66, 67) de sorte qu'ils déplacent les secondes parties d'extrémité (23) des plaques (21) associées aux organes de poussée (63, 64) contre l'articulation (30) sur le second élément de support (62) et les premières parties d'extrémité (22) des plaques (21) associées aux organes de poussée (63, 64) contre l'articulation (30) portant déjà une paire de plaques (21) sur sa douille (32) sur le premier élément de support (32) ;

- au cours de l'action des actionneurs hydrauliques linéaires (66, 67), détecter dans le temps la force de poussée exercée par les actionneurs hydrauliques linéaires (66, 67) et la pression de ceux-ci par le biais d'une pluralité de capteurs (65) ;

- l'actionnement des actionneurs hydrauliques linéaires (66, 67) étant commandé par une unité électronique de traitement et de commande (70) de sorte que, dans une première étape, seuls les actionneurs hydrauliques linéaires principaux (66) soient actionnés jusqu'à ce qu'un premier point d'arrêt soit atteint, et dans une seconde étape ultérieure, les actionneurs hydrauliques linéaires secondaires (67) soient actionnés jusqu'à ce qu'un second point d'arrêt soit atteint, le premier point d'arrêt et le second point d'arrêt étant déterminés par l'unité électronique de traitement et de commande sur la base de la force de poussée détectée, de la pression détectée et de paramètres de référence prédéterminés sur la base des données historiques se rapportant au type et à la géométrie de la chaîne à assembler.

2. Procédé de commande selon la revendication 1 dans lequel le premier point d'arrêt est l'instant auquel la condition suivante est satisfaite :

- la variation dans le temps de la pression détectée des actionneurs hydrauliques linéaires principaux (66) devient supérieure à un premier paramètre seuil de référence ($k_1$).

3. Procédé de commande selon la revendication 2 dans lequel si la chaîne (10) est du type lubrifié, le second point d'arrêt est l'instant auquel les deux conditions suivantes sont satisfaites :

- la variation dans le temps de la pression détectée des actionneurs hydrauliques linéaires secondaires (67) devient supérieure à un second paramètre seuil de référence ($k_2$) ;
- la force détectée exercée par les actionneurs hydrauliques linéaires secondaires (67) est inférieure à une valeur de force maximale de référence ($F_{max}$).

4. Procédé de commande selon la revendication 3 comprenant l'étape consistant à arrêter la seconde étape d'actionnement si la force de poussée exercée par les actionneurs hydrauliques linéaires secondaires (67) dépasse la valeur de force maximale de référence ($F_{max}$) avant que la condition sur la pression soit satisfaite.

5. Procédé de commande selon la revendication 2 dans lequel si la chaîne (10) est du type graissée, le second point d'arrêt est l'instant auquel les deux conditions suivantes sont satisfaites :

- le temps est compris entre une valeur de temps minimale de référence ($t_{min}$) et une valeur de temps maximale de référence ($t_{max}$) ;
- la force détectée exercée par les actionneurs hydrauliques linéaires secondaires (67) est comprise entre une valeur de force minimale de référence ($F_{min}$) et une valeur de force maximale de référence ($F_{max}$).

6. Procédé de commande selon la revendication 5 comprenant l'étape consistant à arrêter la seconde étape d'actionnement si la force de poussée exercée par les actionneurs hydrauliques linéaires secondaires (67) ou le temps dépassent respectivement la valeur de force maximale de référence ($F_{gmax}$) ou la valeur de temps maximale de référence ($t_{max}$).

7. Procédé de commande selon l'une quelconque des revendications précédentes comprenant les étapes consistant à :

   - sélectionner le type et la géométrie de la chaîne (10) à assembler par le biais d'un système d'interface utilisateur (90) ;
   - télécharger les paramètres de référence se rapportant au type et à la géométrie sélectionnés.

8. Procédé de commande selon la revendication 5 comprenant l'étape consistant à :

   - stocker dans la base de données (80) les données détectées.

9. Système de commande (100) pour commander automatiquement l'assemblage d'une chaîne (10) selon le procédé de commande selon l'une quelconque des revendications précédentes, ledit système de commande (100) comprenant :

   - une presse hydraulique (60) comprenant

      - une zone d'assemblage munie d'un premier élément de support (61) et d'un second élément de support (62) configurés pour être positionnés le long d'une direction longitudinale de la chaîne (10) à une distance mutuelle égale à l'extension longitudinale d'un maillon de chaîne (20) de la chaîne (10) à assembler
      - deux actionneurs hydrauliques linéaires principaux (66) opposés agencés pour se déplacer vers les éléments de support (61, 62) le long d'une direction transversale à la direction longitudinale de la chaîne lorsqu'ils sont actionnés, lesdits actionneurs hydrauliques linéaires principaux (66) étant couplés de manière solidaire à une première paire (63) et à une seconde paire (64) d'organes de poussée, les organes de poussée de ladite première paire (63) étant couplés aux actionneurs hydrauliques linéaires principaux (66) respectifs par le biais de l'interposition de deux actionneurs hydrauliques linéaires secondaires (67) respectifs agencés pour se déplacer vers le premier élément de support (61) le long d'une direction transversale à la direction longitudinale de la chaîne lorsqu'ils sont actionnés ;

   - une pluralité de capteurs (65) associés à la presse hydraulique (60) ;
   - une unité électronique de traitement et de commande (70) associée à la presse hydraulique (60) et à la pluralité de capteurs (65) ;
   - une base de données (80) associée à l'unité électronique de traitement et de commande (70).

10. Système de commande (100) selon la revendication 9 comprenant
    un système d'interface utilisateur (90) associé à l'unité électronique de traitement et de commande (70) et configuré pour sélectionner le type et la géométrie de la chaîne à assembler.

11. Programme d'ordinateur apte à être chargé dans la mémoire interne d'un ordinateur numérique, comprenant des parties de code pour déterminer le premier point d'arrêt et le second point d'arrêt et pour commander les étapes d'actionnement selon l'une quelconque des revendications 1 à 7 lorsque ledit programme est actionné par ledit ordinateur.

Fig. 1

Fig. 2

# Fig. 3A

# Fig. 3B

Fig. 5A

Fig. 5B

Fig. 4

Fig. 6A

Fig. 6B

# Fig. 6C

EP 3 708 471 B1

Fig. 7A

Fig. 7B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 4121105 A1